(19) Europäisches Patentamt
European Patent Office
Office européen des brevets

(11) **EP 1 952 004 B1**

(12) **FASCICULE DE BREVET EUROPEEN**

(45) Date de publication et mention
de la délivrance du brevet:
**20.05.2009 Bulletin 2009/21**

(21) Numéro de dépôt: **06841987.8**

(22) Date de dépôt: **27.10.2006**

(51) Int Cl.:
**F02D 35/02** (2006.01)

(86) Numéro de dépôt international:
**PCT/FR2006/051123**

(87) Numéro de publication internationale:
**WO 2007/060349 (31.05.2007 Gazette 2007/22)**

(54) **PROCEDE D'ESTIMATION DE LA MASSE DES GAZ ENFERMEE PENDANT CHAQUE CYCLE DE FONCTIONNEMENT DANS LA CHAMBRE DE COMBUSTION D'UN CYLINDRE D'UN MOTEUR A COMBUSTION INTERNE**

VERFAHREN ZUR SCHÄTZUNG DER PRO ZYKLUS IM ZYLINDER EINER BRENNKRAFTMASCHINE EINGESCHLOSSENEN GASMASSE

METHOD FOR ESTIMATING THE ENCLOSED MASS OF GASES DURING EACH OPERATING CYCLE IN THE COMBUSTION CHAMBER OF AN INTERNAL COMBUSTION ENGINE CYLINDER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.11.2005 FR 0511856**

(43) Date de publication de la demande:
**06.08.2008 Bulletin 2008/32**

(73) Titulaire: **Renault SAS**
**92100 Boulogne Billancourt (FR)**

(72) Inventeurs:
• **EMERY, Pascal**
**F-92400 Courbevoie (FR)**
• **TALON, Vincent**
**F-78180 Montigny Le Bretonneux (FR)**

(56) Documents cités:
**EP-A- 0 522 908        WO-A-20/05028835**
**DE-A1- 19 853 817      FR-A- 2 847 619**
**US-A- 5 245 969**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention est relative à l'estimation de la masse des gaz enfermée pendant chaque cycle de fonctionnement dans la chambre de combustion d'un cylindre d'un moteur à combustion interne à allumage commandé ou à allumage par compression.

Ce paramètre doit être connu avec précision pendant les phases de compression et de détente du cycle de fonctionnement d'un moteur à combustion interne pour en permettre la commande de telle manière que les futures normes de pollution puissent pleinement être satisfaites. De plus, il est nécessaire dans ce but de connaître le paramètre tant pendant le fonctionnement stabilisé que pendant les périodes transitoires de fonctionnement. Or, à l'heure actuelle, il n'existe pas de capteur capable de mesurer directement le paramètre en question.

Cependant, il est connu de déterminer la masse des gaz enfermée dans un cylindre de moteur à combustion interne à partir de cartographies dont les entrées sont la pression dans le collecteur d'admission du moteur et le régime de celui-ci. La relevée de telles cartographies est complexe et demande du temps. En outre, ces cartographies ne sont pas précises et ne peuvent tenir compte du fonctionnement transitoire du moteur. Enfin, il n'est possible de tenir compte ni de la dispersion de fabrication des moteurs d'une série, ni de leur vieillissement.

Par le document WO 2005/028 835, il est connu de déterminer la masse contenue dans le cylindre en la rapportant à la masse de la vapeur de combustible injectée à un instant de post injection. Cette méthode est très complexe et demande un effort de calcul très important au calculateur qui commande le fonctionnement du moteur.

La présente invention a pour but de fournir un procédé d'estimation de la masse des gaz introduite dans un cylindre, qui implique des moyens simples de calcul et nécessite l'utilisation de peu de capteurs pour lui fournir les paramètres d'entrée, ces capteurs étant en outre déjà prévus pour élaborer d'autres grandeurs de commande du moteur.

L'invention a donc principalement pour objet un procédé pour estimer la masse des gaz enfermée pendant chaque cycle de fonctionnement dans la chambre de combustion d'au moins un cylindre d'un moteur à combustion interne remarquable en ce qu'il consiste:

- à relever dans ledit cylindre, à un instant du cycle moteur proche de chaque instant d'ouverture de sa soupape d'échappement, d'une part la pression dans ladite chambre de combustion et d'autre par la température en aval de ladite soupape d'échappement,
- à déterminer le volume de ladite chambre de combustion à l'instant d'ouverture de ladite soupape d'échappement, et
- à effectuer l'estimation de ladite masse de gaz en appliquant la relation:

$$\mathbf{M_{cyl-\theta_{AOE}}} = \frac{\mathbf{P_{cyl-\theta_{AOE}} \cdot V_{cyl-\theta_{AOE}}}}{\mathbf{r \cdot T_{\theta_{AOE}}}}$$

dans laquelle

$M_{cyl-\theta_{AOE}}$ valeur de masse des gaz recherchée,
r constante des gaz parfaits dans l'air, et

à l'instant d'ouverture de la soupape d'échappement:

$P_{cyl-\theta_{AOE}}$ pression dans la chambre de combustion
$V_{cyl-\theta_{AOE}}$ volume de la chambre de combustion
$T_{\theta_{AOE}}{}^2$ température dans la chambre de combustion déduite de ladite température en aval de la soupape d'échappement divisée par un facteur de rendement.

Grâce à ces caractéristiques, le procédé nécessite, outre un calcul simple, l'utilisation de seulement trois capteurs, la valeur de la masse des gaz enfermée dans la chambre de combustion pouvant néanmoins être estimée avec une très bonne approximation.

Selon d'autres caractéristiques avantageuses de ce procédé:

- la valeur du quotient de la température en aval de ladite soupape d'échappement et dudit facteur de rendement est déterminée à partir d'un polynôme de la forme $(a+b \cdot T_{ech})$, dans lequel les coefficients a et b sont obtenues par la méthode des moindres carrés;
- la valeur du volume de la chambre de combustion à l'instant de l'ouverture de la soupape d'échappement est déterminée dans une cartographie à partir du volume de point mort bas de ladite chambre de combustion en fonction de l'angle du vilebrequin dudit moteur.

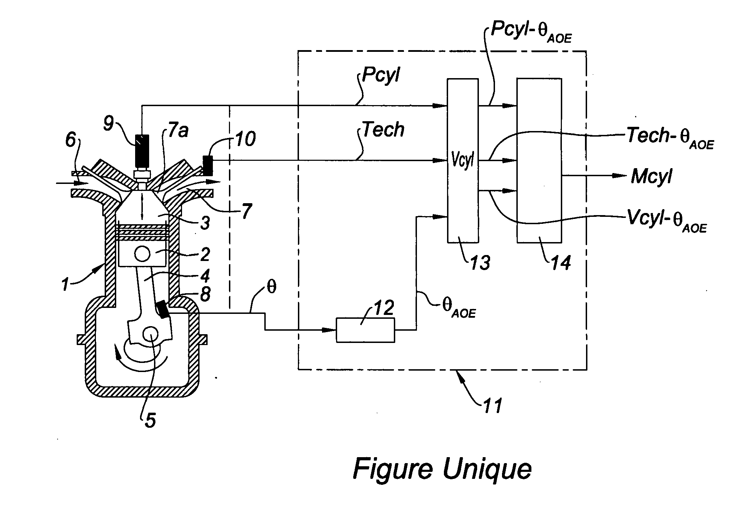

D'autres caractéristiques et avantages de l'invention apparaîtront au cours de la description qui va suivre, donnée uniquement à titre d'exemple et faite en se référant au dessin annexé sur lequel:

- la figure unique est une illustration symbolique de la mise en oeuvre du procédé selon l'invention.

En se reportant à cette figure, on reconnaît le schéma d'un cylindre 1 de moteur à combustion interne, celui-ci pouvant être de type essence ou Diesel et comprendre un ou plusieurs cylindres.

Sont également représentés un piston 2 délimitant la chambre de combustion 3, une bielle 4, un vilebrequin 5, un collecteur d'admission des gaz 6 et un dispositif 7 d'échappement des gaz. Le moteur peut éventuellement être suralimenté par un turbocompresseur (non représenté au dessin).

Selon l'exemple de réalisation représenté, au moins l'un des cylindres du moteur est également équipé d'un capteur 8 mesurant en permanence la position angulaire du vilebrequin 5, d'un capteur 9 permettant de mesurer la pression dans la chambre de combustion 3 et d'un capteur 10 mesurant la température dans le dispositif 7 d'échappement des gaz.

A la place de ces capteurs, on peut également prévoir des moyens équivalents capables de fournir ces mêmes paramètres.

Les valeurs d'angle $\theta$, de pression $P_{cyl}$ et de température $T_{ech}$ relevées respectivement par les capteurs 8, 9 et 10 sont appliquées à un dispositif de calcul 11 qui peut être mis en oeuvre par exemple au sein du programme du calculateur de bord du véhicule automobile ou être réalisé sous la forme d'un dispositif de calcul autonome.

Le dispositif de calcul 11 comprend un bloc fonctionnel 12 qui détecte une valeur prédéfinie $\theta_{AOE}$ de la position angulaire $\theta$ du vilebrequin 5. L'instant correspondant à cette position angulaire est choisi proche de l'instant AOE d'ouverture de la soupape d'échappement 7a du dispositif d'échappement 7 au cours de chaque cycle du moteur.

Les valeurs prédéfinies $\theta_{AOE}$ engendrées dans le bloc fonctionnel 12 à chaque cycle du cylindre 1 sont corrélées dans un bloc de corrélation 13 avec les valeurs de pression $P_{cyl}$ et de température $T_{ech}$ relevées aux instants correspondants par les capteur 9 et 10. En outre, le bloc de corrélation 13 établit la relation entre le volume de point mort bas $V_{cyl}$ du cylindre 1 et le volume qui y est délimité par le piston à l'instant d'ouverture de la soupape d'échappement 7a.

La valeur de ce volume $V_{cyl\text{-}\theta_{AOE}}$ peut être obtenue dans le bloc de corrélation 13, soit par un simple calcul analytique, soit à l'aide d'une cartographie donnant la valeur recherchée en fonction de l'angle $\theta$.

Le bloc de corrélation 13 applique les valeurs de température, de pression et de volume corrélées avec la valeur appropriée de angle $\theta$ à un bloc de calcul 14 dans lequel est estimée la valeur $M_{cyl}$ de la masse de gaz recherchée.

L'estimation en question est en premier lieu basée sur la constatation qu'il existe une corrélation simple entre la température $T_{cyl}$ régnant dans la chambre de combustion 3 et celle $T_{ech}$ présente dans le dispositif d'échappement 7 et relevée par le capteur 10. Cette relation est la suivante:

$$T_{ech} = \eta \cdot T_{cyl} \qquad\qquad (1)$$

dans laquelle $\eta$ est un facteur de rendement.

Le terme $T_{ech}/\eta$ peut être déterminé par approximation grâce à un polynôme de la forme $(a+b \cdot T_{ech})$ ou des polynômes d'ordre supérieur. On verra par la suite de quelle façon on peut déterminer les coefficients a et b de ce polynôme et ainsi le facteur de rendement $\eta$.

Par ailleurs, la loi des gaz parfaits permet d'écrire la relation:

$$P \cdot V = m \cdot r \cdot T \qquad\qquad (2)$$

dans laquelle r est la constante des gaz parfaits dans l'air.

En appliquant la relation (2) au problème de l'invention, il vient:

$$M_{cyl} = \frac{P_{cyl} \cdot \dot{V}_{cyl}}{r \cdot T} \qquad (3)$$

Cette relation est mise en oeuvre dans le bloc de calcul 14 au moment de l'ouverture de la soupape d'échappement 7a. Par conséquent à l'aide des valeurs appliquées à ses entrées, ce bloc estime la masse totale des gaz enfermée dans la chambre de combustion selon la relation:

$$M_{cyl-\theta_{AOE}} = \frac{P_{cyl-\theta_{AOE}} \cdot V_{cyl-\theta_{AOE}}}{r \cdot T_{\theta_{AOE}}} \qquad (4)$$

Pour effectuer ce calcul, la valeur $T_{\theta_{AOE}}$ est déterminée en appliquant la relation (1) ci-dessus de sorte qu'en définitive, le bloc de calcul 14 met en oeuvre la relation

$$M_{cyl-\theta_{AOE}} = \frac{P_{cyl-\theta_{AOE}} \cdot V_{cyl-\theta_{AOE}}}{r \cdot \dfrac{T_{ech-\theta_{AOE}}}{\eta}} \qquad (5)$$

On va maintenant décrire une méthode de détermination des coefficients a et b du polynôme (a+ b·$T_{ech}$).

On utilise à cet effet la relation (2) ci-dessus et on effectue au banc d'essai des mesures sur un moteur type, en le faisant fonctionner à pleine charge avec comme variable le régime du moteur. Dans ces conditions de fonctionnement, on fait alors des mesures de la pression $P_{cyl}$ dans le cylindre et de la température $T_{ech}$ à l'échappement sur une série de points de fonctionnement. Le fait de relever ces mesures à pleine charge dispense de tenir compte des gaz résiduels et d'une éventuelle recirculation des gaz d'échappement.

Pour obtenir la température $T_{cyl}$ à partir des mesures relevées, on détermine ensuite, pour lesdites conditions de fonctionnement, une série de valeurs de la masse enfermée dans la chambre de combustion du cylindre, puis on calcule une série correspondante de valeurs de la température $T_{cyl}$ à l'aide de la formule (2).

Les valeurs de cette masse enfermée peuvent être obtenues de plusieurs façons.

Il est tout d'abord possible d'effectuer une modélisation à l'aide d'un logiciel de type "différences finies" pour effectuer un calcul de remplissage d'où la série de valeurs de masse peut ensuite être déduite, l'avantage de la modélisation consistant en le fait que l'on n'a pas besoin d'essais sur banc. Cette façon d'obtenir les valeurs de masse est donc préférée.

Cependant, on peut également calculer les valeurs de masse à l'aide d'une cartographie de remplissage dressée sur banc d'essai, le remplissage étant établi en fonction de la pression dans le collecteur d'admission et du régime du moteur.

Dans les deux cas, la masse enfermée peut être calculée à l'aide de la relation:

$$M_{air} = \mathrm{Remplissage}(P_{col}, N) \cdot \rho \cdot \mathrm{Cylindrée} \qquad (6)$$

dans laquelle:

$M_{air}$      valeur de la masse enfermée à déterminer
$P_{col}$      pression dans le collecteur d'admission
N      régime du moteur
$\rho$      masse volumique des gaz (environ 1, 17 kg/ m$^3$
Cylindrée      cylindrée unitaire du moteur

Il est également possible d'obtenir les valeurs de la masse enfermée à partir de la richesse et du temps d'injection. Dans ce cas, on utilise la relation suivante:

$$\text{Richesse} = \frac{\dfrac{M_{\text{carburant}}}{M_{\text{air}}}}{\dfrac{1}{\text{PCO}}} \qquad\qquad (7)$$

dans laquelle:

Richesse richesse mesurée à l'échappement
$M_{\text{carburant}}$ masse de carburant introduite (mesure de consommation)
PCO pouvoir comburivore (environ 14,7)

On forme ainsi pour chacun des points de fonctionnement relevés à pleine charge en fonction du régime des couples de valeurs de température, l'un des membres de chaque couple étant la température $T_{\text{ech}}$ et l'autre la température estimée $T_{\text{cyl}}$ obtenue par l'intermédiaire de la relation (2).

Ces couples de valeurs permettent de constituer une base de comparaison entre les deux températures.

On applique ensuite une méthode des moindres carrés sur cette base de comparaison afin de calculer les coefficients a et b de la relation déjà mentionnée entre les deux températures. Autrement dit, pour obtenir la valeur η, on minimise la différence:

$$T_{\text{cyl}} - \left(a + b \cdot T_{\text{ech}}\right) \qquad\qquad (7)$$

Il est à noter que même si on part des valeurs de masse enfermée obtenues moyennant le remplissage ou la mesure de richesse, le calcul du facteur η est faite une fois pour toutes et ne nécessite pas un temps considérable sur banc d'essai.

Grâce à l'invention, on dispose ainsi d'un procédé d'estimation simple ne nécessitant que très peu de moyens de calcul et utilisant des valeurs d'entrée provenant de capteurs classiques qui en règle général sont déjà utilisés pour le calcul d'autres paramètres de commande d'un moteur à combustion interne. De plus, la grandeur recherchée est estimée en permanence à chaque cycle de combustion du cylindre c'est-à-dire tant pendant le fonctionnement stabilisé que pendant les phases transitoires de fonctionnement du moteur.

**Revendications**

1. Procédé pour estimer la masse ($M_{\text{cyl}}$) des gaz enfermée pendant chaque cycle de fonctionnement dans la chambre de combustion (3) d'au moins un cylindre (1) d'un moteur à combustion interne **caractérisé en ce qu'**il consiste:

    - à relever dans ledit cylindre (1), à un instant du cycle moteur proche de chaque instant d'ouverture de sa soupape d'échappement (7a), d'une part la pression ($P_{\text{cyl-}\theta_{\text{AOE}}}$) dans ladite chambre de combustion et d'autre part la température ($T_{\text{ech}}$) en aval de ladite soupape d'échappement (7a),

    - à déterminer le volume ($V_{\text{cyl-}\theta_{\text{AOE}}}$) de ladite chambre de combustion (3) à l'instant d'ouverture de ladite soupape d'échappement, et

    - à effectuer l'estimation de ladite masse de gaz en appliquant la relation:

$$M_{\text{cyl-}\theta_{\text{AOE}}} = \frac{P_{\text{cyl-}\theta_{\text{AOE}}} \cdot V_{\text{cyl-}\theta_{\text{AOE}}}}{r \cdot T_{\theta_{\text{AOE}}}}$$

dans laquelle

$m_{cyl-\theta AOE}$ valeur de masse des gaz recherchée,
r constante des gaz parfaits dans l'air, et

à l'instant d'ouverture de la soupape d'échappement:

$P_{cyl-\theta AOE}$ pression dans la chambre de combustion
$V_{cyl-\theta AOE}$ volume de la chambre de combustion
$T_{\theta AOE}$ température dans la chambre de combustion déduite de ladite température en aval de la soupape d'échappement divisée par un facteur de rendement.

2.   Procédé selon la revendication 1, **caractérisé en ce qu'**il consiste à déterminer la valeur du quotient de la température ($T_{ech}$) en aval de ladite soupape d'échappement (7a) et dudit facteur de rendement à partir d'un polynôme de la forme (a+b·$T_{ech}$), dans lequel les coefficients a et b sont obtenues par la méthode des moindres carrés.

3.   Procédé selon l'une des revendications 1 ou 2, **caractérisé en ce que** la valeur du volume ($V_{cyl-\theta AOE}$) de la chambre de combustion (3) à l'instant de l'ouverture de la soupape d'échappement est déterminée dans une cartographie à partir du volume ($V_{cyl}$) de point mort bas de ladite chambre de combustion en fonction de l'angle du vilebrequin (5) dudit moteur.

## Claims

1.   Method for estimating the enclosed mass ($M_{cyl}$) of gases during each operating cycle in the combustion chamber (3) of at least one cylinder (1) of an internal combustion engine, **characterized in that** it involves:

- recording in the said cylinder (1), at a time in the engine cycle close to each time its exhaust valve (7a) is opened, the pressure ($P_{cyl-\Theta EOA}$) in the said combustion chamber and the temperature ($T_{ech}$) downstream of the said exhaust valve (7a),
- determining the volume ($V_{cyl-\Theta EOA}$) of the said combustion chamber (3) at the time of opening of the said exhaust valve, and
- estimating the said gas mass by the applying the following relationship:

$$M_{Cyl-\Theta_{EOA}} = \frac{P_{cyl-\Theta_{EOA}} \cdot V_{cyl\ \Theta_{EOA}}}{r \cdot T_{\Theta_{EOA}}}$$

in which

$M_{cyl-\Theta EOA}$ = desired gas mass value,
r = constant of ideal gases in the air, and at the time of opening of the exhaust valve:
$P_{cyl-\Theta EOA}$ = pressure in the combustion chamber
$V_{cyl-\Theta EOA}$ = volume of the combustion chamber
$T_{\Theta EOA}$ = temperature in the combustion chamber deduced from the said temperature downstream of the exhaust valve divided by an efficiency factor.

2.   Method according to Claim 1, **characterized in that** it involves determining the value of the quotient of the temperature ($T_{ech}$) downstream of the said exhaust valve (7a) and the said efficiency factor from a polynomial of the form (a + b·$T_{ech}$), in which the coefficients a and b are obtained by the least squares method.

3.   Method according to either of Claims 1 and 2, **characterized in that** the value of the volume ($V_{cyl-\Theta EOA}$) of the combustion chamber (3) at the time of opening of the exhaust valve is determined in a mapping from the bottom dead centre volume ($V_{cly}$) of the said combustion chamber as a function of the angle of the crankshaft (5) of the said engine.

**Patentansprüche**

1. Verfahren zum Schätzen der Masse ($M_{cyl}$) der Gase, die während jedes Betriebszyklus in der Brennkammer (3) mindestens eines Zylinders (1) eines Verbrennungsmotors eingeschlossen ist, **dadurch gekennzeichnet, dass** es darin besteht:

   - in dem Zylinder (1) in einem Zeitpunkt des Motorzyklus nahe jedem Öffnungszeitpunkt seines Auslassventils (7a) einerseits den Druck ($P_{cyl-\theta_{ADE}}$) in der Brennkammer und andererseits die Temperatur ($T_{ech}$) hinter dem Auslassventil (7a) zu erfassen,
   - das Volumen ($V_{cyl-\Theta_{ADE}}$) der Brennkammer (3) im Öffnungszeitpunkt des Auslassventils zu bestimmen, und
   - die Schätzung der Gasmasse durchzuführen, indem die folgende Gleichung angewendet wird:

$$M_{cyl-\theta_{AOE}} = \frac{P_{cyl-\theta_{AOE}} \cdot V_{cyl-\theta_{AOE}}}{r \cdot T_{\theta_{AOE}}}$$

   in der bedeuten:

   $M_{cyl-\theta_{ADE}}$ gesuchter Massewert der Gase,
   r Konstante der idealen Gase in der Luft,

   und
   im Öffnungszeitpunkt des Auslassventils:

   $P_{cyl-\theta_{AOE}}$ Druck in der Brennkammer
   $V_{cyl-\theta_{AOE}}$ Volumen der Brennkammer
   $T_{\theta_{AOE}}$ Temperatur in der Brennkammer abgeleitet von der Temperatur hinter dem Auslassventil dividiert durch einen Wirkungsgradfaktor.

2. Verfahren nach Anspruch 1, **dadurch gekennzeichnet, dass** es darin besteht, den Wert des Quotienten der Temperatur ($T_{ech}$) hinter dem Auslassventil (7a) und des Wirkungsgradfaktors ausgehend von einem Polynom der Form ($a+b\cdot T_{ech}$) zu bestimmen, bei dem die Koeffizienten a und b durch die Methode der kleinsten Quadrate erhalten werden.

3. Verfahren nach einem der Ansprüche 1 oder 2, **dadurch gekennzeichnet, dass** der Wert des Volumens ($V_{cyl-\theta_{AOE}}$) der Brennkammer (3) im Öffnungszeitpunkt des Auslassventils in einer Kartographie ausgehend von dem unteren Totpunktvolumen ($V_{cyl}$) der Brennkammer in Abhängigkeit vom Winkel der Kurbelwelle (5) des Motors bestimmt wird.

*Figure Unique*

EP 1 952 004 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005028835 A